# EUROPÄISCHE PATENTANMELDUNG

(11) **EP 0 987 487 A1**
(43) Veröffentlichungstag der Anmeldung: **22.03.2000**
(21) Anmeldenummer: 99117724.7
(22) Anmeldetag: 08.09.1999
(51) Int. Cl.: F17C 7/00, B01F 3/02

(54) **Block zur Entspannung und Mischung von Gasen**

(30) Priorität: 16.09.1998 DE 19842413
(71) Anmelder: Linde Aktiengesellschaft, 65189 Wiesbaden (DE)
(72) Erfinder: Herrmann, Johann, 85716 Unterschleissheim (DE)
(74) Vertreter: Obermüller, Bernhard

(57) **Zusammenfassung**

Es wird eine Vorrichtung zur Gasversorgung für einen Verbraucher (V) mit einem Gasgemisch aus mehreren Gaskomponenten behandelt, wobei eine Gasentnahme über Druckminderer (7a, 7b, 7c) zur Reduzierung der in den Gasbehältern (A, B, C) vorliegenden Drücke erfolgt und in einem Mischer (3, 4, 8) das gewünschte Gasgemisch gemischt wird. Erfindungsgemäß sind die Druckminderer (7a, 7b, 7c) zur Reduzierung der in den Gasbehältern (A, B, C) vorliegenden Drücke und der Mischer (3, 4, 8) zum Mischen des gewünschten Gasgemisches in einer baulichen Einheit (10) zusammengefaßt. Die bauliche Einheit (10) wird bevorzugt in der Nähe der Gasbehälter (A, B, C) und nicht beim Verbraucher (V) angeordnet. Es kann von der baulichen Einheit lediglich eine Verbindung (9) für die Gaszufuhr zum Verbraucher (V) vorgesehen sein. Die bauliche Einheit (10) kann durch ein Gehäuse hergestellt sein. Sie kann in Form eines Armaturenblockes vorliegen. Die Vorrichtung eignet sich insbesondere zum Einsatz im Zusammenhang mit einem Laser als Verbraucher (V).

## Beschreibung

Die Erfindung betrifft eine Vorrichtung zur Gasversorgung für einen Verbraucher mit einem Gasgemisch aus mehreren Gaskomponenten umfassend mehrere Gasbehälter, Druckminderer zur Reduzierung der in den Gasbehältern vorliegenden Drücke und ein Mischer zum Mischen des gewünschten Gasgemisches.

Gase werden in der industriellen Anwendung im Zusammenhang mit zahlreichen Technologien benötigt. In vielen Fällen werden dabei große Anforderung an die Gasreinheiten gestellt. Nachfolgend wird beispielhaft die Gasversorgung von Gaslasern betrachtet.

Das benötigte Gasgemisch dient als Betriebsgas (Lasergas) für den Laser, beispielsweise einen CO₂-Laser. Grundsätzlich ist die Gasversorgung unter Verwendung eines vorgemischten Gases möglich. Der Nachteil hierbei ist, daß die Zusammensetzung des Gasgemisches nicht mehr variiert und/oder optimiert werden kann. Daher werden in vielen Fällen die benötigten Gasgemische vor Ort hergestellt.

Der konventionelle Aufbau der Gasversorgung für das Betriebsgas (Lasergas) eines Gaslasers für den Fall, daß die verwendeten Reingase vor Ort zum Betriebsgas vermischt werden, umfaßt in der Regel Einzelflaschen (Einzelbündel) oder Flaschenbatterien (Bündelbatterien) für die zum Mischen benötigten Reingase, Druckminderer zur Reduzierung der in den Gasflaschen vorliegenden Drücke und einen Mischer zum Mischen des gewünschten Betriebsgasgemisches. Für einen CO₂-Laser als Gaslaser werden als Reingase beispielsweise die Gaskomponenten Kohlendioxid, Stickstoff und Helium benötigt. Der maximale Fülldruck in den Gasflaschen kann beispielsweise 200 bar oder 300 bar betragen. Die drei Gaskomponenten CO₂, N₂ und He werden über Druckminderer aus den Gasflaschen entnommen. Hierbei werden die Drücke von den Flaschendrücken auf beispielsweise 10 bar reduziert. Gleichzeitig können hierbei die Flaschendrücke überwacht und die Gaszufuhr auf andere Gasflaschen umgeschaltet werden, sobald die benutzten Gasflaschen leer werden. Es ist auch möglich, beispielsweise lediglich eine Anzeige vorzusehen, die den Zustand, daß die Gasflasche leer ist, anzeigt. Leitungen führen von den Druckminderem zu den drei Entnahmestellen, die in der Nähe des Lasers montiert sind. An den Entnahmestellen wird der Druck nochmals reduziert beispielsweise auf 5 bar. In manchen Fällen werden auch an den Entnahmestellen zweistufige Druckminderer eingesetzt, sodaß die Druckminderer an den Gasflaschen entfallen können. Von den Druckminderem gehen Leitungen für die drei Gase CO₂, N₂ und He zum Laser. In diesem ist ein Gasmischer eingebaut. Dieser Gasmischer umfaßt beispielsweise einen Steuerdruckminderer sowie drei Domdruckminderer, welche alle drei Gaskomponenten auf den gleichen Druck, beispielsweise von 3 bar, bringen. Außerdem sind hier in der Regel noch Druckschalter integriert, welche überwachen, daß alle drei Gaskomponenten im Laser ankommen, sowie Magnetventile, Nadelventile und Mischbehälter, um für die richtige Mischung zu sorgen. Eine derartige Gasversorgung ist beispielsweise im Firmenprospekt der LINDE AG, Werksgruppe Technische Gase, "*LASPUR*® Gasversorgung Laser-Materialbearbeitung", Publikationsnummer: 8521/9, Druckauflage 04/98, beschrieben.

Bei der oben beschriebenen Gasversorgung werden üblicherweise die Gaskomponenten von den Gasflaschen bis zur Entnahmestelle durch Edelstahl- oder Kupferrohre geführt. Im Falle, daß die beiden Druckstufen in zweistufigen Druckminderem vereint sind, besteht dann eine Rohrverbindung aus Edelstahl- oder Kupferrohren zwischen Gasflaschen und Entnahmestellen. Im Falle, daß getrennte Druckstufen vorgesehen sind, besteht die Rohrverbindung aus den Edelstahl- oder Kupferrohren zwischen den ersten Druckstufen und den zweiten Druckstufen. Die Rohre und die zugehörigen Verbindungen sind aufgrund der hohen Anforderung an die Gasreinheit von hoher Qualität und mit aufwendiger Montage verbunden. Mit diesem apparativen Aufwand geht ein hoher finanzieller Aufwand einher, da die verwendeten Rohre und Rohrverbindungen und die aufwendige Montage sehr teuer sind.

Von den Entnahmestellen zum Laser werden in der Regel Kunststoffschläuche verlegt. Diese weisen den Nachteil auf, daß es wegen der verhältnismäßig geringen Gasmengen, die in ihnen fließen (etwa 0,1 - 200 l/h je nach Gasart und Lasertyp), zur Verunreinigung der Reingase kommt. Dies kann beispielsweise durch Weichmacher aus dem Schlauchmaterial, aber auch durch Diffusion von beispielsweise Wasserdampf von außen in das Reingas geschehen. Verunreinigungen der zur Füllung eines Lasers vorgesehen Reingase machen sich im Laser relativ schnell negativ bemerkbar.

Außerdem besteht die Gefahr, daß eine Gaskomponente wie Heilium durch das Schlauchmaterial ausdiffundieren kann und somit Gasverluste verursacht werden.

Die beschriebenen Nachteile treten selbstverständlich nicht nur bei Laseranlagen und deren Gasversorgungen auf. Am Beispiel der Gasversorgung von Laser mit Betriebsgas können jedoch die Probleme und Nachteile des Standes der Technik in aller Deutlichkeit aufgezeigt werden.

Der Erfindung liegt die Aufgabe zugrunde, eine Vorrichtung zur Gasversorgung der eingangs genannten Art aufzuzeigen, welche die genannte Nachteile vermeidet und eine gut funktionierende Gasversorgung für Verbraucher aufzeigt, die mit möglichst wenig Einzelkomponenten auskommt und daher besonders kompakt und preisgünstig ist.

Erfindungsgemäß wird die Aufgabe dadurch gelöst, daß die Druckminderer zur Reduzierung der in den Gasbehältern vorliegenden Drücke und der Mischer zum Mischen des gewünschten Gasgemisches in einer baulichen Einheit zusammengefaßt sind.

Die Erfindung basiert auf der Idee, die in konventionellen Vorrichtungen vorhandene Trennung zwischen der Gasentnahme und der Mischvorrichtung aufzuheben und eine Kombination von Flaschenentnahme und Gasmischung in einer baulichen Einheit bzw. in einem Gerät vorzusehen. Die kombiniert bauliche Einheit von Gasentnahme und Mischung der Gaskomponenten zum gewünschten Gasgemisch wird somit direkt aus den Gasbehältern versorgt. Zwischen den Gasbehältern und der baulichen Einheit sind keine Druckminderer vorhanden, sodaß die Behälterdrücke im wesentlichen an der baulichen Einheit anliegen. Als Gasbehälter für die erfindungsgemäße Vorrichtung kommen grundsätzlich alle geeigneten Gasbehälter in Betracht. Dies sind insbesondere Gasflaschen (einzelne Gasflaschen und/oder Flaschenbündel), aber auch Gastanks.

Die Gasmischung in der erfindungsgemäßen Vorrichtung sollte möglichst in der Nähe der Gasbehälter und nicht im oder am Verbraucher erfolgen. Die bauliche Einheit ist daher bevorzugt näher bei den Gasbehältern als beim Verbraucher angeordnet, in der Regel sogar möglichst dicht an den Gasbehältern. Für den Anwendungsfall des Gaslasers erfolgt dann die Gasmischung nicht im Laser, sondern beispielsweise direkt an der Wand neben den Gasflaschen. Zwischen baulicher Einheit und Verbraucher besteht nach der erfindungsgemäßen Vorrichtung nur eine einzige (mechanische) Verbindung für die Gaszufuhr anstelle von mehrere Verbindungen für jede einzelne Gaskomponente bei der konventionellen Vorrichtung. Dadurch verringert sich der apparative Aufwand. Abgesehen davon ist durch eine einzige Verbindung zwischen baulicher Einheit und dem Verbraucher aber auch die Reinheit der Gase eher zu gewährleisten, weil in einem Rohr und/oder Schlauch im Verhältnis zur Verunreinigung größere Volumenströme des Gasgemisches fließen als in den Einzelverbindungen für jede einzelne Gaskomponente bei der konventionellen Vorrichtung. Gemäß der Erfindung ist daher vorteilhafterweise von der baulichen Einheit lediglich eine Verbindung zum Verbraucher vorgesehen.

Die bauliche Einheit kann durch ein Gehäuse hergestellt sein. In diesem Fall werden alle nötigen Ventile, Druckminderer und gegebenenfalls Drucküberwachungselemente in einem Gehäuse untergebracht. Auf diese Weise können viele Verbindungsteile eingespart werden, die einerseits mit Kosten verbunden sind, und andererseits die Gefahr von Dichtheitsproblemen vergrößern. Außerdem reduzieren sich die benötigten Befestigungselemente. Ferner kann dadurch ein zusätzlicher Gasversorgunsschrank eingespart werden, welcher immer häufiger gefordert wird, um elektrische Komponenten von anderen zu trennen.

Besondere Vorteile ergeben sich, wenn die bauliche Einheit in Form eines Armaturen- oder Aufnahmeblockes vorliegt. Die Verbindung der in der baulichen Einheit integrierten Geräte und Komponenten kann in diesem Fall nur über Ausnehmungen und/oder Bohrungen in dem Block erfolgen.

Bei der erfindungsgemäßen Vorrichtung kann in diesen Fällen bei den gegebenenfalls zahlreichen, zu einer baulichen Einheit kombinierten Geräten, die beispielsweise aus Druckminderern, Drucksensoren und/oder Drucküberwachungselementen, Ventilen (z.B. Nadel- und /oder Magnetventilen) und Durchflußmeßeinheiten (elektrische und/oder mechanische) etc. bestehen können, auf jeweils ein eigenes Gehäuse und möglicherweise auf eigene Verbindungsleitungen verzichtet werden.

In Weiterbildung der Erfindung kann in der erfindungsgemäßen Vorrichtung zur Gasversorgung eine Vorrichtung zur Überwachung und/oder Registrierung der Drücke vorgesehen sein. Die bauliche Einheit als Kombination aus Gasentnahme und Mischeinrichtung könnte beispielsweise mit einem Rechner in Verbindung stehen, der die Überwachung und Registrierung aller Drücke übernimmt und manche oder alle Steuer- und Überwachungsaufgaben (Flasche leer, Umschaltung auf ein volles Gebinde, Alarm zum Flaschenwechsel oder ähnliches), sowie gegebenenfalls die Messung des Gasverbrauchs beispielsweise zwecks Kostenzuordnung übernehmen kann. Es sind folglich zusätzliche Vorteile mit der Maßnahme verbunden, daß die Vorrichtung zur Überwachung und/oder Registrierung der Drücke durch den Verbraucher angesteuert ist. Die Ansteuerung durch den Verbraucher ermöglicht einen Informationsaustausch, der beispielsweise die Gasmengen, die Gaszusammensetzung, Störungen in der Gasversorgung und dergleichen betreffen kann.

Über diesen Rechner kann bei entsprechender Ansteuerung durch den Verbraucher (beispielsweise einer Ansteuerung durch den Laser) auch die Zusammensetzung des Gasgemisches und/oder einzelne, mehrere oder alle durchfließenden Gasmengen verändert werden, sodaß die Gasgemischzusammensetzung und/oder die Gasmengen je nach momentaner Anforderung variieren können. Damit wird die Flexibilität der Gasversorgung erhöht. Es ist deshalb besonders vorteilhaft, wenn die Vorrichtung zur Überwachung und/oder Registrierung der Drücke Mittel zur Veränderung der Gasgemischzusammensetzung und/oder Gasmengen aufweist.

Die Erfindung ist grundsätzlich in Verbindung mit verschiedenartigen Verbrauchern einsetzbar. Die erfindungsgemäße Vorrichtung kann auch die Gasversorgung für mehrere gleichartige oder verschiedenartige Verbraucher übernehmen. Die erfindungsgemäße Vorrichtung entfaltet besondere Vorteile bei der Anwendung der erfindungsgemäßen Vorrichtung im Zusammenhang mit einem Laser als Verbraucher. Grundsätzlich können mit der erfindungsgemäßen Vorrichtung Betriebsgase (Lasergase) für Gaslaser, aber auch Arbeitsgase bei der Materialbearbeitung unter Einsatz von Lasern betroffen sein. Die größten Vorteile und Kosteneinsparungen dürften allerdings im Zusammenhang mit der Gasversorgung von Gaslasern mit Betriebsgasen zu erreichen sein.

Dank der Erfindung kann eine Vorrichtung zur Verfügung gestellt werden, die eine anwender- und servicefreundliche Gasversorgung einschließlich der Herstellung der benötigten Gasmischungen gewährleisten kann. Beispielsweise kann die Vorrichtung aufgrund ihrer Kompaktheit in Augenhöhe (d.h. leicht zugänglich und gut sichtbar) an der Wand hängen und muß nicht - wie dies gelegentlich bei Komponenten der Gasentnahme und Gasmischung vorkommen soll - schwer zugänglich in einem Schaltschrank in Bodennähe untergebracht werden, weil der Schaltschrank noch zufällig dafür Platz bietet.

Im folgenden werden Einzelheiten und Vorteile der Erfindung anhand eines schematisch gezeigten Ausführungsbeispieles näher erläutert.

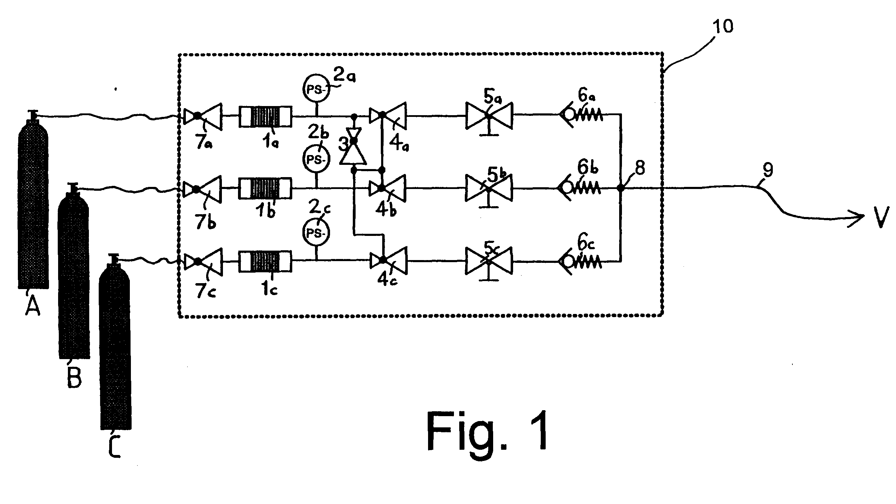

Dabei zeigt
- Figur 1:: Eine erfindungsgemäße Gasversorgung mit drei Gaskomponenten.

Dem Verbraucher V soll ein Gasgemisch bestehend aus den Gaskomponenten A, B und C zugeführt werden. Wird als Verbraucher V beispielsweise ein CO₂-Laser verwendet, sind dies die Gaskomponenten CO₂, N₂ und He.

Die Gaskomponenten A, B und C werden über Verbindungsleitungen zu den Druckminderem 7a, 7b und 7c geleitet, wo eine Druckreduzierung vom Gasflaschendruck erfolgt. Die Druckminderer 7a, 7b und 7c können ein- oder mehrstufig ausgebildet sein. Die Druckminderer 7a, 7b und 7c befinden sich in einer baulichen Einheit, beispielsweise im Armaturenblock 10, mit der Gasmischeinrichtung, die den Steuerdruckminderer 3, die drei Domdruckminderer 4a, 4b und 4c und die Zusammenführung 8 umfaßt. ferner sind die Filter 1a, 1b und 1c, die Druckwächter 2a, 2b und 2c, die Nadelventile 5a, 5b und 5c, sowie die Rückschlagventile 6a, 6b und 6c vorgesehen. Die Druckminderer (7, 3, 4), Filter 1, Druckwächter (2), Nadelventile (5), Rückschlagventile (6) und Zusammenführung 8 sitzen im Armaturenblock 10 und benötigen daher jeweils kein eigenes Gehäuse, kein eigenes Befestigungsmaterial und aufgrund der Aussparungen und/oder Bohrungen im Armaturenblock 10 keine Verbindungsleitungen. Vom Armaturenblock 10 führt lediglich eine Verbindungsleitung 9 zum Verbraucher V. Alternativ zur in Figur dargestellten Zusammenführung 8 kann auch ein Mischbehälter vorgesehen sein.

## Patentansprüche

1. Vorrichtung zur Gasversorgung für einen Verbraucher (V) mit einem Gasgemisch aus mehreren Gaskomponenten umfassend mehrere Gasbehälter (A, B, C), Druckminderer (7a, 7b, 7c) zur Reduzierung der in den Gasbehältern (A, B, C) vorliegenden Drücke und ein Mischer (3, 4, 8) zum Mischen des gewünschten Gasgemisches, **dadurch gekennzeichnet**, daß die Druckminderer (7a, 7b, 7c) zur Reduzierung der in den Gasbehältern (A, B, C) vorliegenden Drücke und der Mischer (3, 4, 8) zum Mischen des gewünschten Gasgemisches in einer baulichen Einheit (10) zusammengefaßt sind.

2. Vorrichtung nach Anspruch 1, dadurch gekennzeichnet, daß der die bauliche Einheit (10) näher bei den Gasbehältern (A, B, C) als beim Verbraucher (V) angeordnet ist.

3. Vorrichtung nach Anspruch 1 oder 2, dadurch gekennzeichnet, daß von der baulichen Einheit lediglich eine Verbindung (9) für die Gaszufuhr zum Verbraucher (V) vorgesehen ist.

4. Vorrichtung nach einem der Ansprüche 1 bis 3, dadurch gekennzeichnet, daß die bauliche Einheit (10) durch ein Gehäuse hergestellt ist.

5. Vorrichtung nach einem der Ansprüche 1 bis 4, dadurch gekennzeichnet, daß die bauliche Einheit (10) in Form eines Armaturen- oder Aufnahmeblockes vorliegt.

6. Vorrichtung nach einem der Ansprüche 1 bis 5, dadurch gekennzeichnet, daß eine Vorrichtung zur Überwachung und/oder Registrierung der Drücke vorgesehen ist.

7. Vorrichtung nach Anspruch 6, dadurch gekennzeichnet, daß die Vorrichtung zur Überwachung und/oder Registrierung der Drücke durch den Verbraucher (V) angesteuert ist.

8. Vorrichtung nach Anspruch 6 oder 7, dadurch gekennzeichnet, daß die Vorrichtung zur Überwachung und/oder Registrierung der Drücke Mittel zur Veränderung der Gasgemischzusammensetzung und/oder der Gasmengen aufweist.

9. Vorrichtung nach einem der Ansprüche 1 bis 8, dadurch gekennzeichnet, daß der Verbraucher (V) ein Laser ist.

10. Anwendung der Vorrichtung nach einem der Ansprüche 1 bis 9 im Zusammenhang mit einem Laser als Verbraucher (V), insbesondere für das Befüllen des Lasers mit dem Gasgemisch.
